# EUROPEAN PATENT APPLICATION

(11) **EP 3 715 988 A1**
(43) Date of publication of application: **30.09.2020**
(21) Application number: 19165285.8
(22) Date of filing: 26.03.2019
(51) Int. Cl.: G05B 23/02

(54) **SYSTEM, DEVICE AND METHOD FOR DETECTING ANOMALIES IN INDUSTRIAL ASSETS**

(71) Applicant: Siemens Aktiengesellschaft, 80333 München (DE)
(72) Inventor: ARRABOTU, Sheetal Reddy, 560100 Bangalore, Karnataka (IN); RAVEENDRAN, Varsha, 560062 Bangalore; Karnataka (IN); SUDHAKARAN, Vinay, 560076 Bangalore, Karnataka (IN); YESHWANTH, Chandan, 560072 Bangalore, Karnataka (IN)
(74) Representative: Patentanwaltskanzlei WILHELM & BECK

(57) **Abstract**

A system, device and method for detecting anomalies in industrial assets is disclosed. The method for detecting anomalies in at least one industrial asset (185) includes receiving condition data associated with the industrial asset (185) on a computing device, wherein the condition data includes multimodal data comprising at least one of image (182), video (184), sound (186) and text (188); analysing the condition data with respect to one or more episodes; wherein each episode is a combination of the condition data for a time instant and predicted data for a previous time instant; and detecting anomalies in real-time in the industrial asset (185) by detecting anomalies in each of the episodes.

## Description

Technical installations may include multiple assets, operations and processes to produce a resultant product. Improving productivity for individual assets may be difficult if it suffers unplanned downtime. The assets are susceptible to minor or significant anomalies in the operating parameters. Such anomalies may indicate a failure in the asset or the technical installation. Generally, the reasons for failure may be known mainly from domain expertise.

The known techniques to detect anomalies include machine learning techniques that depend on a collection of historical data associated with the condition of the industrial asset. The historical data is given to train a machine learning model. Such a machine learning model may suffer from expensive retraining cost when dealing with new condition data, and thus may be poorly scalable for real-world applications.

Further, the machine learning model may inefficiently relearn when the new condition data is encountered. In certain situations, anomaly detection may require rapid inference in real-time by observing small quantities of the condition data. This constraint may lead to difficulty in detecting the anomalies. In addition, when the condition data is complex with image, video, sound and text, the machine learning model may be unable to perform multi-task learning.

Therefore, there exists a need to detect anomalies in industrial assets in real-time. Accordingly, it is the object of the present invention to detect anomalies in one or more industrial assets in real-time.

The object can be achieved by detecting anomalies in condition data associated with the industrial asset by detecting anomalies in each episode of the condition data. As used herein, the term "condition data" refers to multi-modal data including images, videos, vibration/sound and/or text. The condition data reflects condition of the industrial asset and the environment of the industrial asset and a technical installation that is associated with the industrial asset. The condition data is a measure of the operating parameters of the industrial asset. The term "operating parameter" refers to one or more characteristics of the assets and the technical installation. The operation parameters are used to define performance of the industrial asset.

The method includes receiving condition data associated with the industrial asset on a computing device. The computing device is an apparatus that includes a communication unit capable of receiving the condition data including image, video, sound and text. Further, the method includes analysing the condition data with respect to one or more episodes. As used herein, "episode" refers to a combination of the condition data at a time instant and predicted data for a previous time instant. The episodes may be used as training data for a learning module in the computing device. In an embodiment, training is carried out in episodes. Each episode includes of several time instants. At the time instant 1, the input to the learning module is (x1, predicted value of x0), and the input at time instant 2 is (x2, predicted value of x1).

The method may include generating an anomaly binding for the episodes by comparing the condition data and validated anomalies. As used herein "validated anomalies" are a set of anomalies that are known to exist in relation to the industrial asset. For example, anomalies in a motor include shaft misalignment, bearing damage, rotor rub, shaft fatigue, bent shaft, etc. The "anomaly binding" refers to conditional-dependencies between the industrial assets and the validated anomalies.

To generate the anomaly bindings, the method may include determining difference between the condition data and the validated anomalies. Further, determining a cosine similarity between the condition data and the validated anomalies. Based on the difference and the cosine similarity of the condition data, each episode is mapped to at least one validated anomaly. The mapping is referred to as the anomaly bindings.

The anomaly bindings act as comprehensive representation of the condition of the industrial asset. The comprehensive representation is learnt for the different modalities of image, video, sound and text using a separate encoder-decoder network. The network comprises one modality network for each modality to map the condition data to the validated anomalies. The mapping is then combined by an input-output mixer, and then encoded by the encoder network to give a hidden representation. This is followed by a decoder network, which attempts to reconstruct the condition data from this hidden representation. In an embodiment, the network may be augmented with a Deep Belief Network or Deep Boltzmann Machine to reconstruct missing modalities.

Generation of the anomaly bindings is complemented with a technique to access the anomaly bindings quickly in real-time. To achieve this advantage, the method may include dynamically storing the anomaly binding in a memory unit based on a context of the anomaly binding. As used herein "context" refers to association between anomaly bindings and is generated based on the difference in the condition data and the validated anomalies. Further, the invention includes a technique to autonomously learn associations between the anomaly bindings and store them based on the association.

The method may include determining the context for each of the anomaly bindings. The context includes a long-term context and a short-term context. The method may further include determining the long-term context for the anomaly binding based on a weighted function on the episodes. The method may also include determining types of the anomaly binding based on the weighted function. The weighted function is autonomously learnt from of historical condition data of the industrial asset. Essentially, the long-term context is used to learn type of anomaly bindings and to associatively store the anomaly bindings in the memory. The anomaly bindings are used later for inference. The long-term context is determined based on a slow weight update using gradient descent/backpropagation.

Furthermore, the method may include determining the short-term context for the anomaly binding based on a binding parameter. The binding parameter is associated with the condition data received at the time instant. The short-term context is a fast update of the memory. The weights of the weighted function are not updated when the short-term context is determined. The determination of the context is advantageous and crucial considering various modalities of condition data. The context is used to effectively access and update the anomaly bindings in real-time.

The method includes detecting anomalies in real-time in the industrial asset by detecting anomalies in each of the episodes. The condition data when received in real-time is analysed as episodes with respect to the anomaly bindings in the memory. If an episode maps to an anomaly binding. The anomaly associated with the anomaly binding is detected as the anomaly in the industrial asset.

The method may include detecting anomalies in a first industrial asset based on operation of a second industrial asset. The present invention is advantageous as it envisages a scenario where a new anomaly can arise, which the industrial asset is not familiar with. The invention relies on learnings of similar industrial asset to train another industrial asset.

The method may include receiving a second condition data associated with a second industrial asset. Further, the method may include determining a second anomaly binding for episodes in the second condition data. Furthermore, the method may include determining a second context for the second anomaly binding based on difference in the second condition data and the validated anomalies. Additionally, the method may include determining a first context of a first anomaly binding associated with the first industrial asset based on the second context.

To encourage sharing of the second context with the first industrial asset, the method may include establishing a consensual and secure communication environment. The method may include accessing the second context of the second anomaly binding by enabling a consensual and secure communication between the first industrial asset and the second industrial asset.

The consensual and secure communication is important as the first and second industrial assets may be owned by different entities. In order to facilitate the sharing of knowledge among entities that cannot trust each other, consensus and secure communication is established. In an embodiment, blockchain for data management is used. Blockchain eliminates the need to trust by decentralizing the data management and encoding regulations, thus creating an ecosystem where industrial assets can exchange learnings with each other directly. In the invention, individual address locations in the memory may be inserted as separate records on the Blockchain. When two industrial assets, for example first industrial asset and second industrial asset, get into an agreement a container contract is created. The container contract includes a map structure that references to the data items and keys to the individual data entity contracts of the first industrial asset and the second industrial asset.

The method may include generating an aggregated anomaly relationship by filtering asset identification parameters from the first anomaly binding and the second anomaly binding associated with each of the industrial assets. Further, the method may include generating an aggregated context for the aggregated anomaly relationship, wherein the aggregated context includes the second context and the first context.

The aggregated anomaly relationship and the aggregated context may be determined by a global interface. When a new anomalous data point is detected in the condition data at the first industrial asset, the data point needs to be classified. The global interface will inform the first industrial asset about the location of the address on the Blockchain where the anomaly binding resides in the memory of the second industrial asset. Based on the consensual communication that exists between the two parties collaborative learning is achieved. Retrieving data via a Blockchain is quicker since the anomaly binding is queried from the local copy in first industrial asset's Blockchain instance.

The object of the present invention is also achieved by an apparatus detecting anomalies in one or more industrial assets. The apparatus comprises one or more processing units and a memory unit communicative coupled to the one or more processing units. The memory unit comprises an anomaly detection module stored in the form of machine-readable instructions executable by the one or more processing units. The anomaly detection module is configured to perform method steps described above. The execution of the asset module can also be performed using co-processors such as Graphical Processing Unit (GPU), Field Programmable Gate Array (FPGA) or Neural Processing/Compute Engines.

According to an embodiment of the present invention, the apparatus can be an edge computing device. As used herein, "edge computing" refers to computing environment that is capable of being performed on an edge device (e.g., connected to the sensors unit in an industrial setup on one end and to a remote server(s) such as for computing server(s) or cloud computing server(s) on the other end), which may be a compact computing device. A network of the edge computing devices can also be used to implement the apparatus. Such a network of edge computing devices is referred to as a fog network.

Additionally, the object of the present invention is achieved by a system comprising a cloud computing platform that includes an aggregated anomaly module configured to perform method steps associated with generation of aggregated anomaly relationship and aggregated context. Further, the cloud computing platform includes a global training module configured to train anomaly detection module. The anomaly detection module is configured to perform one or more method as described above.

The object of the present invention is achieved by a computer-program product having machine-readable instructions stored therein, which when executed by a processor unit, cause the processor unit to perform a method as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
FIG 1 illustrates a block diagram of an apparatus to detect anomalies in an industrial asset, according to an embodiment of the present invention;
FIG 2 is a schematic representation of the operation of the apparatus, according to FIG 1;
FIG 3 illustrates a block diagram of a system to detect anomalies in multiple industrial assets, according to an embodiment of the present invention;
FIG 4 is a schematic representation of the operation of the system, according to FIG 3; and
FIG 5 is a flowchart of a method of detecting anomalies in one or more industrial assets.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

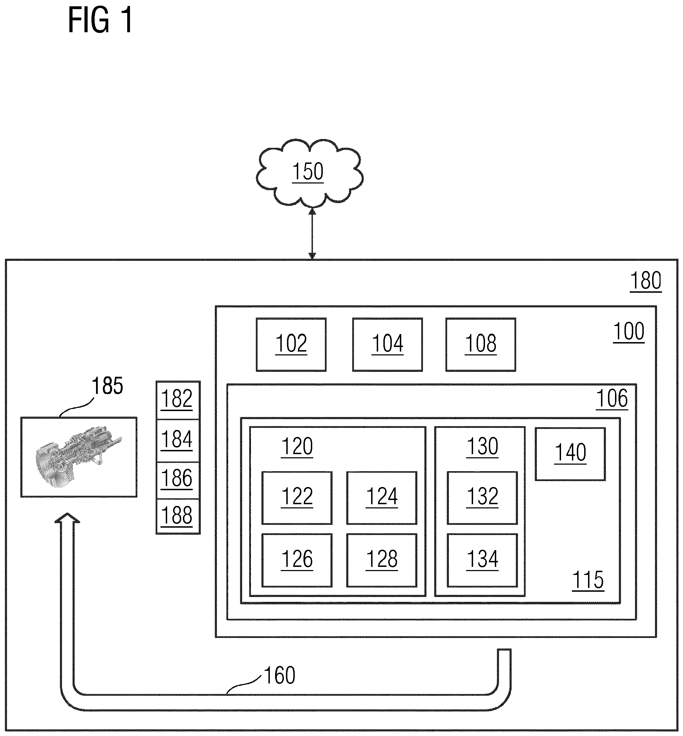

FIG 1 illustrates a block diagram of an apparatus 100 to detect anomalies in an industrial asset 185 in a technical installation 180. The apparatus 100 is an edge device 100 located within an installation network. The edge device 100 includes an operating system 102, a memory 104 and application runtime 106. The edge device 100 also includes a graphical user interface 108.

The edge operating system 102 is an embedded real-time operating system (OS) such as the LinuxTM operating system. The operating system 102 enables communication with the sensing/monitoring devices in the technical installation 180, the industrial asset 185 and with an IoT cloud platform 150. The application runtime 106 is a layer on which the one or more software applications 120, 130 and 140 are installed and executed in real-time. The edge operating system 102 also allows running one or more software applications such as perception module 120, cognition module 130 and decision module 140 deployed in the edge device 100. The perception module 120, cognition module 130 and decision module 140 are collectively referred to as anomaly detection module 115.

The perception module 120 includes a sensor processing module 122, an image processing module 124, a speech recognition module 126 and a text processing module 128. The perception module 120 is configured to receive condition data associated with the industrial asset 185. Each of the modules 122-124 are configured as encoder-decoder.

The condition data 182-188 includes multi-modal data including images 182, videos 184, vibration/sound 186 and/or text 188. The condition data reflects condition of the industrial asset 185 and the environment of the industrial asset 185 and the technical installation 180. The condition data 182-188 are a measure of the operating parameters of the industrial asset 185.

For example, sensing/monitoring devices in the technical installation generates the condition data 182-188. Example sensor/monitoring devices include unmanned-mobile imaging devices, acoustic sensors, thermal imaging devices, vibration sensors, current and voltage sensors, etc. The term "operating parameter" refers to one or more characteristics of the assets and the technical installation. The operation parameters are used to define performance of the industrial asset 185 and the technical installation 180.

The cognition module 130 includes an episode module 132 and a binding module 134. The episode module 132 is configured to generate the episodes when the condition data 182-188 is received. The episode module 132 is configured to analyse the condition data 182-188 with respect to one or more episode.

As used herein "episode" refers to a combination of the condition data at a time instant and predicted data for a previous time instant. For example, if the industrial asset is a turbine 185, datapoints in the vibration data 186 are used to generate the episodes. If at time instant t2 the vibration data 186 is value x2 and predicted data for time instant t1 i.e. y1. Accordingly, the episode includes (x2, y1).

The binding module 134 is configured to generate an anomaly binding for the episodes by comparing the condition data and validated anomalies. As used herein "anomaly binding" includes conditional-dependencies between the industrial assets and the validated anomalies. For example, for the turbine 185 the anomaly binding is a mapping of the episode (x2, y1) with a validated anomaly of looseness in blade. Accordingly, "validated anomalies" are a set of anomalies that are known to exists in relation to the turbine 185.

Further, the binding module 134 is configured to store the anomaly bindings in the memory 104 based on a context of the anomaly binding. The storing of the anomaly binding is performed dynamically. As used herein "context" refers to the difference and similarity between the condition data and the validated anomalies.

In an embodiment, the context includes a long-term context and a short-term context. The long-term context refers to a context generated based on a weighted function on the episodes. For example, the binding module 134 generates the long-term context based on weight update using gradient descent/backpropagation. The binding module 134 is configured to generate the long-term context including a learning strategy to autonomously learn types of the anomaly binding. The types of anomaly bindings are autonomously learnt based on similarity of the condition data and an approximation of the validated anomalies stored in the memory 104.

The short-term context refers to context generated based on a binding parameter. The binding parameter is associated with the condition data 182-188 in real-time for a time instant. The short-term context is stored dynamically in the memory 104 by the binding module 134. In the short-term context the weights are not updated. Accordingly, the binding module 134 stores the anomaly bindings dynamically based on the type of anomaly binding in the memory 104.

The decision module 140 is configured to detecting anomalies in real-time in the industrial asset 185 by detecting anomalies in each of the episodes. The decision module 140 is configured to map episodes to one or more anomaly bindings. Accordingly, anomaly associated with the mapped anomaly binding is identified as the anomaly for the industrial asset 185.

In an embodiment, when a multiple episode anomaly are detected the decision module 140 is configured to perform an uncertainty analysis to determine the most likely anomaly in the industrial asset. In another embodiment, the decision module 140 is configured to determine the anomaly in the industrial asset 185 by performing a root cause analysis of the multiple episode anomalies. The detected anomalies are used to modify the operating parameters of the industrial asset 185 as indicated by the arrow 160.

The detected anomalies are displayed on the graphical user interface 108. The operating system 102 is configured to determine remaining life of the turbine 185 based on the detected anomalies. The remaining life may then be displayed on the graphical user interface 108.

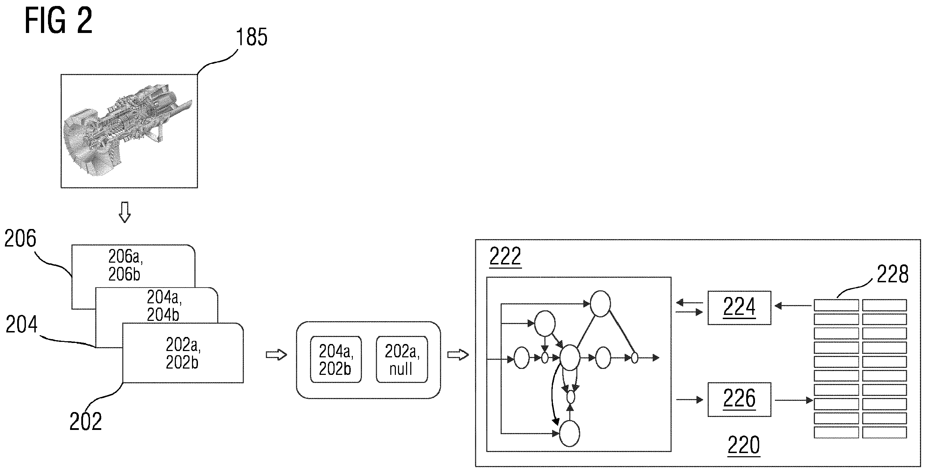

The operation of the edge device 100 is explained further in FIG 2. FIG 2 is a schematic representation of the operation of the edge device 100. The edge device 100 receives the condition data from the turbine 185. The condition data include combustion temperature, compressor outlet temperature, inlet pressure, exhaust pressure, etc. The condition data is grouped into a set of (x, y) pairs 202-206. For example, pair 202 includes (x1, y1) i.e. 202a, 202b where 'y' is the label corresponding to the condition data 'x'. For example, measure of the compressor outlet temperature at time instant t1 is 202a. The label of the measure is 202b. In an embodiment, the label 'y' is predicted based on the condition data 'x'.

The set of pairs 202-206 are used to generate episodes 210. The episodes 210 are generated by the episode module 132. The episodes 210 include a combination of the condition data for t2 and predicted data for t1. For example, the pair 204 includes the condition data 204a and the label 204b at time instant t2. The pair 202 includes the condition data 202a and the label 202b at time instant t1. Accordingly, the episodes 210 includes the values (204a, 202b and 202a, null). At the time instant t1, (x1, null) is generated and at t2 (x2, y1) is generated. By combining the condition data for a time instant and the predicted data for previous time instant, the episodes 210 are capable of providing a context to the condition data.

The episodes 210 are input to an attention interface 220. The attention interface is generated by the binding module 134. In an embodiment, the attention interface 220 is a neural network algorithm that automatically learns weights for the episodes 210. The episodes 210 are mapped to the validated anomalies to generate the anomaly bindings. The anomaly bindings are stored dynamically based on the weights. In an embodiment, the weights are learnt from historical condition data associated with the turbine 185. The dynamic storing of anomaly bindings enables selective focus on relevant anomaly bindings for a given time instant. Therefore, the detection of anomaly in the turbine 185 is achieved with high accuracy and speed.

To achieve the dynamic storing capability, the attention interface 220 includes a logic unit 222, a read unit 224, a write unit 226 and a memory 228. The logic unit 222 is configured to generate an anomaly binding for the episodes 210 by comparing the condition data and validated anomalies. For example, for the turbine 185 the anomaly binding is a mapping of the episode (204a, 202b) with the validated anomaly. Considering that the 204a is compressor outlet temperature and 202b is predicted data of the compressor outlet temperature for the previous time instant, accordingly. The combination of 204a, 202b is mapped to the validated anomaly of increased compression pressure.

In an embodiment, the logic unit 222 operates as a Neural Turing machine along with the memory 228. The logic unit includes a recurrent neural network algorithm, such as a Long Short-term Memory (LSTM) algorithm. The LSTM algorithm is configured to selectively remember the condition for long durations of time instants.

In operation, the logic unit 222 is capable of determining difference between the condition data and the validated anomalies. Further, determining a cosine similarity between the condition data and the validated anomalies. Based on the differences and the cosine similarity the logic unit 222 generates the anomaly binding. Furthermore, the logic unit 222 is capable of determining the context of the anomaly binding based on the difference in the condition data and the validated anomalies. The context includes a short-term context and a long-term context.

The write unit 226 is capable of dynamically storing the anomaly binding in the memory 228 based on the context of the anomaly binding. Accordingly, the anomaly bindings with associable context are stored such that the anomaly bindings are retrieved easily. The write unit 226 is configured to decompose each the storing operation into erase operation followed by write operation. The erase operation and write operation ensure that incorrect anomaly bindings are erased and updated with a more accurate anomaly binding.

The read unit 224 accesses the anomaly bindings based on the context. Accordingly, the read unit 224 does not access a single location in the memory 228 rather accesses a distribution of different memory locations in the memory 228.

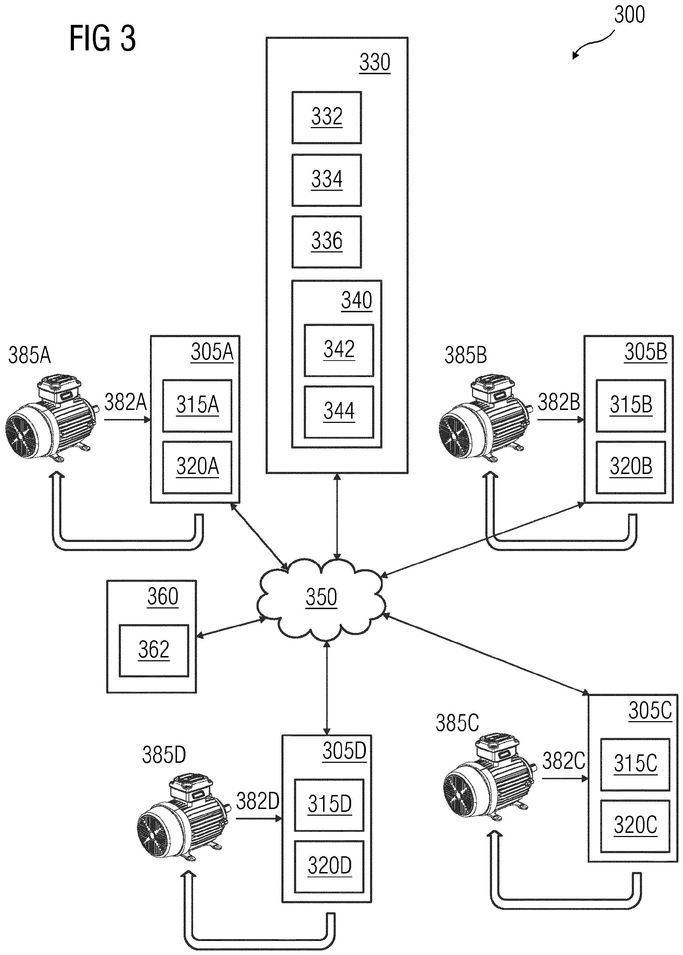

FIG 3 illustrates a block diagram of a system 300 to detect anomalies in multiple motors 385A-385C, according to an embodiment of the present invention. It is appreciated by a person skilled in the art that the system 300 in its functionality is capable of operating on multiple turbines as described in FIG. 1. According, the embodiment of motors 385A-385C does not limit the below description to motors.

The system 300 includes edge devices 305A-305C, each associated with the motors 385A-385C, respectively. Further, the system 300 includes a cloud computing platform 330 and a user device 360. The cloud computing platform 330 is communicatively coupled to the user device 360 via a communication unit 332 and the network interface 350. The user device 360 includes a display 362 and may include a processor and a memory. The display 362 is used to display the detected anomalies.

The operation of the edge devices 305A-305C is similar to the edge device 100. The edge devices 305A-305C include the anomaly detection modules 315A-315C, respectively. The operation of the anomaly detection modules 315A-315C is similar to the operation of the anomaly detection module 115. Accordingly, each of the anomaly detection modules 315A-315C are configured to analyse condition data 382A-382C with respect to one or more episodes.

Further, the anomaly detection modules 315A-315C are configured to generate anomaly bindings for the episodes by comparing the condition data 382A-382C and validated anomalies. In an embodiment, the validated anomalies are stored in a database 336 of the cloud computing platform 330. Accordingly, a set of anomalies that are known to exists in relation to the motors 385A-385C are stored in the database 336. The validated anomalies may be learnt based on historical condition data associated with the motors 385A-385C.

The anomaly bindings are stored based on a context of each of the condition data 382A, 382B and 382C. For ease of reference, the anomaly binding and context of the condition data 382A for the motor 385A is stored and is referred to as first anomaly binding and first context. The anomaly binding and context of the condition data 382B for the motor 385B is stored and is referred to as second anomaly binding and second context. The anomaly binding and context of the condition data 382C for the motor 385C is stored and is referred to as third anomaly binding and third context.

The anomaly detection modules 315A, 315B and 315C are configured to detect anomalies in real-time in the each of the motors 385A, 385B and 385C, respectively. The anomaly detection modules 315A, 315B and 315C detect anomalies by detecting anomalies in each of the episodes associated with the condition data 382A, 382B and 382C, respectively.

In addition to the anomaly detection module 315A-315C, the edge devices 305A-305C include a consensus module 320A-320C. The consensus module 320A-320C is configured to establish consensual communication between edge devices 305A-305C. In operation, the consensus module 320A, 320B and 320C enables collaborative learning between edge devices 305A-305C.

In an embodiment, the edge device 305A is unable to determine the first context for the condition data 382A. For example, the condition data 382A at a time instant is "XYZ" and has been not foreseen or expected. Then, the edge device 305A is unable to determine the first context. In such a scenario, the consensus module 320A establishes communication with the consensus modules 320B and 320C. By establishing the consensual communication, the edge device 305A has access to the second context and the third context associated with motors 385B and 385C. Therefore, if "XYZ" is associated with the third context. The associated anomaly binding generated by the anomaly detection module 315C is used to detect anomaly in the motor 385A.

The cloud computing platform 330 enables the consensual communication between the edge devices 305A, 305B and 305C. The cloud computing platform 330 includes the communication unit 332, a processor 334, the database 336 and a memory 340. The memory 340 includes an anomaly relationship module 342 and a global training module 344. The processor 334 is configured to execute the modules 342, 344 stored in the memory 340.

The anomaly relationship module 342 is configured to generate an aggregated anomaly relationship for the motors 385A-385C. The anomaly relationship module 342 receives the first anomaly binding, the second anomaly binding and the third anomaly binding from the edge devices 305A, 305B and 305C, respectively. The anomaly relationship module 342 filters motor identification parameters associated with each of the motors 385A-385C from the first anomaly binding, the second anomaly binding and the third anomaly binding.

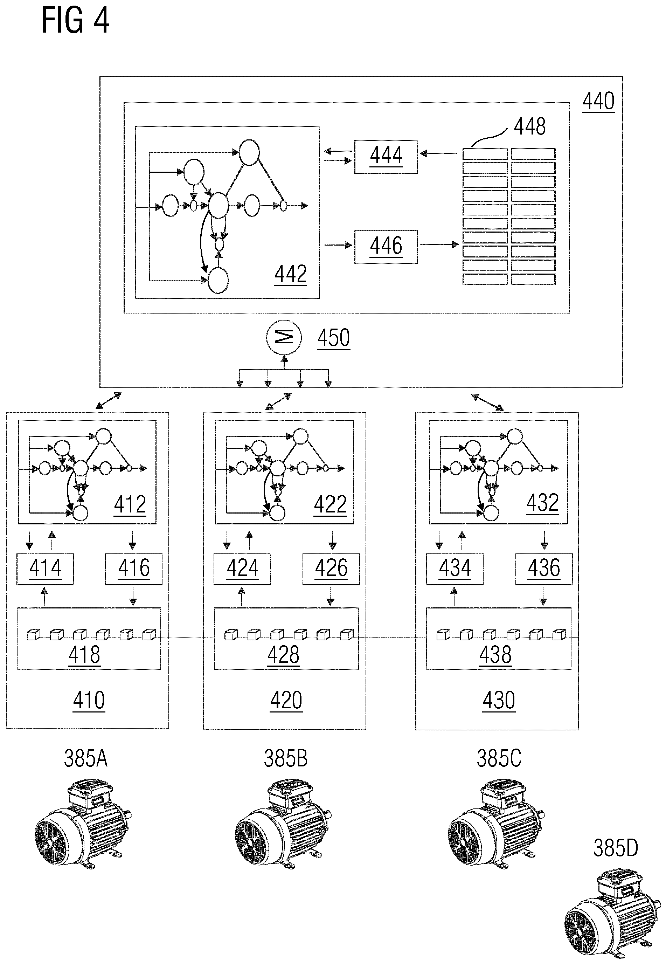

Further, the anomaly relationship module 342 is configured to generate an aggregated context for the aggregated anomaly relationship. The aggregated context includes weighted aggregate of the first context, the second context and the third context. When the edge device 305A is unable to determine the first context, the anomaly relationship module 342 initiates consensual communication to be established with the edge device 305A. The operation of the anomaly relationship module 342 is explained in FIG 4.

The global training module 344 is configured to train the anomaly detection modules based on the aggregated context and the aggregated anomaly relationship. For example, when a new motor 385D is added in addition to motors 385A-385C. Anomaly detection module 315D autonomously learns weights based on the aggregated context and aggregated anomaly relationship. The weights are used to define a strategy for dynamic storing of the anomaly bindings in the edge device 305D.

FIG 4 is a schematic representation of the operation of the system 300. The anomaly detection modules 315A, 315B and 315C are configured to generate attention interfaces 410, 420 and 430, respectively. Each attention interface includes logic unit 412, 422 & 432, read unit 414, 424 & 434, write unit 416, 426 & 436, and memory 418, 428 & 438. The attention interfaces 410, 420 and 430 operate in a similar manner as that of the attention interface 220. In addition, the memory 418, 428 & 438 are enabled to communicate consensually between each other. Accordingly, each of the memory 418, 428 & 438 may include a risk identification module to identify risk associated with establishing communication with each other. The risk is determined based on a number of times each of the memory 418, 428 & 438 has participated in secure consensual communications, nature of information communicated, etc.

The attention interfaces 410, 420 and 430 is generated by a binding module in each of the anomaly detection modules 315A, 315B and 315C. In an embodiment, the attention interface is a neural network algorithm that automatically learns weights for the episodes generated from the condition data 382A, 382B and 382C. The episodes are mapped to validated anomalies to generate anomaly bindings. The anomaly bindings are stored dynamically based on the weights learnt from the aggregated context and aggregated anomaly relationship.

The aggregated context and aggregated anomaly relationship is determined by global attention interface 440. The global attention interface 440 is generated by the anomaly relationship module 332. The global attention interface 440 includes a global logic unit 442, a read unit 444, a write unit 446, a memory 448.

The operation of the global attention interface 440 is explained with regard to addition of the motor 385D. When condition data is received from the motor 385D, the condition data is grouped into pairs and the pairs are used to generated episodes. This is similar to the operation described in FIG 2. For example, motor vibration data of the motor 385D is v1, v2, v3, v4...etc. The associated predicted values for the vibration data are y1, y2, y3, y4... etc. The episodes generated will be (v1, null), (v2, y1)... etc.

The motor vibration data v1, v2, v3, v4...etc is received by the cloud platform 330 and analysed by the global attention interface 440. Considering the datapoint v1, the global logic unit 442 performs a forward pass to determine a global-episode and a global-context for v1. The global-episode and global-context are used to read the memory 418, 428 and 438. Each memory 418, 428 and 438 are configured to output an anomaly binding for v1. The anomaly bindings are aggregated by the aggregation unit 450 to generate the aggregated anomaly relationship. The aggregated anomaly relationship is input to the anomaly detection module 315D.

In another embodiment, shaft vibration data s1 of the motor 385A is identified as a deviation, with low confidence. As used herein 'confidence' refers to the measure of likelihood of the anomaly being detected in the motor 385A. In case of low confidence, the shaft vibration data s1 is input to the global attention interface 440. The global attention interface 440 receives associated anomaly bindings from memory 428 and 438. The anomaly bindings are aggregated as the anomaly relationship for shaft vibration data s1. The aggregated anomaly relationship is updated in the memory 418.

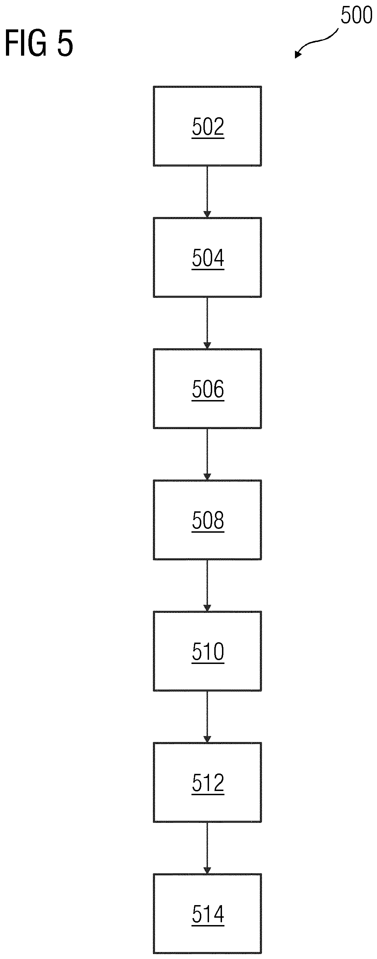

FIG 5 is a flowchart of a method 500 of detecting anomalies in one or more industrial assets. The method begins at step 502 by receiving condition data associated with the industrial asset on a computing device. The computing device includes an edge device, or a server configured to perform the method 500. The condition data includes multi-modal data including image, video, sound and/or text.

At step 504, the condition data is analysed with respect to one or more episode. Each episode is a combination of the condition data for a time instant and predicted data for a previous time instant.

At step 506, an anomaly binding for the episodes is generated by comparing the condition data and validated anomalies. The anomaly binding includes conditional-dependencies between the industrial assets and the validated anomalies. The validated anomalies are a set of anomalies that are known to exists in relation to the industrial asset. To perform the comparison of the condition data and the validated anomalies, difference between the condition data and the validated anomalies is determined. Furthermore, a cosine similarity between the condition data and the validated anomalies is determined.

At step 508, the anomaly binding is dynamically stored in a memory unit based on a context of the anomaly binding. The context is determined based on the difference in the condition data and the validated anomalies. The context includes a short-term context and a long-term context. The long-term context for the anomaly binding is determined based on a weighted function on the episodes. Further, the short-term context for the anomaly binding is determined based on a binding parameter. The binding parameter is associated with the condition data received at the time instant.

At step 510, type of the anomaly binding is determined based on the weighted function. The weighted function is autonomously learnt from one of historical condition data of the industrial asset. The weighted function is also autonomously learnt from a global training data that is an aggregate of anomaly bindings associated with similar industrial assets.

At step 512, anomalies in real-time in the industrial asset are detected by detecting anomalies in each of the episodes.

The anomaly binding for the episode indicates anomaly in the episode, which is used to detect anomaly in the industrial asset.

At step 514, anomalies in a first industrial asset are detected based on operation of a second industrial asset. A second anomaly binding is determined for episodes in the second condition data. Further, a second context for the second anomaly binding is determined based on difference in the second condition data and the validated anomalies. A first context of a first anomaly binding associated with the first industrial asset is determined based on the second context.

To determine the first context, the second context of the second anomaly binding needs to be accessed. This is achieved by enabling a consensual communication between the first industrial asset and the second industrial asset.

In another embodiment, the first context is determined based on the global training data. The global training data includes aggregated anomaly relationship and aggregated context. Accordingly, step 514 includes generating an aggregated anomaly relationship by filtering asset identification parameters from the first anomaly binding and the second anomaly binding associated with each of the industrial assets. Further, step 516 includes generating an aggregated context for the aggregated anomaly relationship, wherein the aggregated context includes the second context and the first context.

The above disclosed method, device and system may be achieved via implementations with differing or entirely different components, beyond the specific components and/or circuitry set forth above. With regard to such other components (e.g., circuitry, computing/processing components, etc.) and/or computer-readable media associated with or embodying the present invention, for example, aspects of the invention herein may be implemented consistent with numerous general purpose or special purpose computing systems or configurations. Various exemplary computing systems, environments, and/or configurations that may be suitable for use with the disclosed subject matter may include, but are not limited to, various clock-related circuitry, such as that within personal computers, servers or server computing devices such as routing/connectivity components, hand-held or laptop devices, multiprocessor systems, microprocessor-based systems, set top boxes, smart phones, consumer electronic devices, network PCs, other existing computer platforms, distributed computing environments that include one or more of the above systems or devices, etc.

In some instances, aspects of the invention herein may be achieved via logic and/or logic instructions including program modules, executed in association with the circuitry, for example. In general, program modules may include routines, programs, objects, components, data structures, etc. that perform particular tasks or implement particular control, delay or instructions. The inventions may also be practiced in the context of distributed circuit settings where circuitry is connected via communication buses, circuitry or links. In distributed settings, control/instructions may occur from both local and remote computer storage media including memory storage devices.

The system and computing device along with their components herein may also include and/or utilize one or more type of computer readable media. Computer readable media can be any available media that is resident on, associable with, or can be accessed by such circuits and/or computing components. By way of example, and not limitation, computer readable media may comprise computer storage media and communication media. Computer storage media includes volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and can accessed by computing component. Communication media may comprise computer readable instructions, data structures, program modules or other data embodying the functionality herein. Further, communication media may include wired media such as a wired network or direct-wired connection, and wireless media such as acoustic, RF, infrared, 4G and 5G cellular networks and other wireless media. Combinations of the any of the above are also included within the scope of computer readable media.

In the present description, the terms component, module, device, etc. may refer to any type of logical or functional circuits, blocks and/or processes that may be implemented in a variety of ways. For example, the functions of various circuits and/or blocks can be combined with one another into any other number of modules. Each module may even be implemented as a software program stored on a tangible memory (e.g., random access memory, read only memory, CD-ROM memory, hard disk drive) to be read by a central processing unit to implement the functions of the invention herein. Or, the modules can comprise programming instructions transmitted to a general purpose computer or to processing/graphics hardware via a transmission carrier wave. Also, the modules can be implemented as hardware logic circuitry implementing the functions encompassed by the invention herein. Finally, the modules can be implemented using special purpose instructions (SIMD instructions), field programmable logic arrays or any mix thereof which provides the desired level performance and cost.

As disclosed herein, implementations and features consistent with the present inventions may be implemented through computer-hardware, software and/or firmware. For example, the systems and methods disclosed herein may be embodied in various forms including, for example, a data processor, such as a computer that also includes a database, digital electronic circuitry, firmware, software, or in combinations of them. Further, while some of the disclosed implementations describe components such as software, systems and methods consistent with the invention herein may be implemented with any combination of hardware, software and/or firmware. Moreover, the above-noted features and other aspects and principles of the invention herein may be implemented in various environments. Such environments and related applications may be specially constructed for performing the various processes and operations according to the present invention or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the invention herein, or it may be more convenient to construct a specialized apparatus or system to perform the required methods and techniques.

Aspects of the method and system described herein, such as the logic, may be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Some other possibilities for implementing aspects include: memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metal-conjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioural, register transfer, logic component, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signalling media or any combination thereof. Examples of transfers of such formatted data and/or instructions by carrier waves include, but are not limited to, transfers (uploads, downloads, e-mail, etc.) over the Internet and/or other computer networks via one or more data transfer protocols (e.g., Hypertext Transfer Protocol (HTTP), File Transfer Protocol (FTP), Simple Mail Transfer Protocol (SMTP), and so on).

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application.

Although certain presently preferred implementations of the present invention have been specifically described herein, it will be apparent to those skilled in the art to which the inventions pertain that variations and modifications of the various implementations shown and described herein may be made without departing from the scope of the inventions herein. Accordingly, it is intended that the inventions be limited only to the extent required by the appended claims and the applicable rules of law.

### References:

FIG 1
Apparatus/edge device 100
operating system 102
memory 104
application runtime 106
graphical user interface 108
anomaly detection module 115
perception module 120
sensor processing module 122
image processing module 124
speech recognition module 126
text processing module 128
cognition module 130
episode module 132
binding module 134
decision module 140
IoT cloud platform 150
feedback arrow 160
technical installation 180
industrial asset 185
condition data 182-188
images 182
videos 184
vibration/sound 186
text 188

FIG 2
condition data pairs 202-206
episodes 210
attention interface 220
logic unit 222
read unit 224
write unit 226
memory 228

FIG 3
system 300
edge devices 305A-305C
anomaly detection modules 315A-315C
Anomaly detection module 315D
edge device 305D
consensus module 320A-320C
processor 334
database 336
cloud computing platform 330
communication unit 332
memory 340
anomaly relationship module 342
global training module 344
network interface 350
user device 360
display 362
motors 385A-385C
condition data 382A-382C
new motor 385D

FIG 4
attention interfaces 410, 420 and 430
logic unit 412, 422 & 432
read unit 414, 424 & 434
write unit 416, 426 & 436
memory 418, 428 & 438
global attention interface 440
global logic unit 442
read unit 444
write unit 446
memory 448
aggregation unit 450

FIG 5 is a flowchart

## Claims

1. A method for detecting anomalies in at least one industrial asset (185), the method comprising:
receiving condition data associated with the industrial asset (185) on a computing device (100), wherein the condition data includes multi-modal data comprising at least one of image (182), video (184), sound (186) and text (188);
analysing the condition data (182-188) with respect to one or more episodes (210); wherein each episode is a combination of the condition data for a time instant and predicted data for a previous time instant; and
detecting anomalies in real-time in the industrial asset (185) by detecting anomalies in each of the episodes (210).

2. The method according to claim 1 further comprising:
generating an anomaly binding for the episodes by comparing the condition data (182-188) and validated anomalies, wherein the anomaly binding includes conditional-dependencies between the industrial asset and the validated anomalies, wherein the validated anomalies are a set of anomalies that are known to exists in relation to the industrial asset (185); and
dynamically storing the anomaly binding in a memory unit (104) based on a context of the anomaly binding.

3. The method according to claim 2 wherein generating the anomaly binding for the episodes by comparing the condition data and the validated anomalies, comprises:
determining difference between the condition data (182-188) and the validated anomalies; and
determining a cosine similarity between the condition data (182-188) and the validated anomalies.

4. The method according to one of claim 2 and claim 3 wherein dynamically storing the anomaly binding in a memory unit (104) based on the context of the anomaly binding, comprises:
determining the context of the anomaly binding based on the difference in the condition data and the validated anomalies, wherein the context includes a short-term context and a long-term context.

5. The method according to claim 4 further comprising:
determining the long-term context for the anomaly binding based on a weighted function on the episodes; and
determining the short-term context for the anomaly binding based on a binding parameter, wherein the binding parameter is associated with the condition data received at the time instant.

6. The method according to claim 5, wherein determining the long-term context for the anomaly binding based on a weighted function on the episodes, comprises:
determining type of the anomaly binding based on the weighted function, wherein the weighted function is autonomously learnt from of historical condition data of the industrial asset (185).

7. The method according to one of the preceding claims, further comprising:
detecting anomalies in a first industrial asset (385A) based on operation of a second industrial asset (385B).

8. The method according to claim 7 further comprising:
receiving a second condition data associated with the second industrial asset (385B);
determining a second anomaly binding for episodes in the second condition data; and
determining a second context for the second anomaly binding based on difference in the second condition data and the validated anomalies.

9. The method according to claim 7, wherein detecting anomalies in the condition data based on the second anomaly binding further comprises:
determining a first context of a first anomaly binding associated with the first industrial asset (385A) based on the second context.

10. The method according to claim 8, further comprising:
accessing the second context of the second anomaly binding by enabling a consensual communication between the first industrial asset (385A) and the second industrial asset (385B).

11. The method according to one of claim 2 and claim 8, further comprising:
generating an aggregated anomaly relationship by filtering asset identification parameters from the first anomaly binding and the second anomaly binding associated with each of the industrial assets (385A-385D); and
generating an aggregated context for the aggregated anomaly relationship, wherein the aggregated context includes the second context and the first context.

12. An apparatus (100) for detecting anomalies in at least one industrial asset (185), the apparatus comprising:
one or more processing units (102); and
an application runtime (106) communicative coupled to the one or more processing units, wherein the application runtime (106) comprises an anomaly detection module (115) stored in the form of machine-readable instructions executable by the one or more processing units, wherein the anomaly detection module (115) is configured to perform one or more method steps according to claims 1 to 10.

13. A system (300) for detecting anomalies in at least one industrial asset (385A-385D), the system comprising:
a cloud computing platform (330) comprising:
an aggregated anomaly module (342) configured to perform method steps according to claim 11; and
a global training module (344) configured to train an anomaly detection module; wherein the anomaly detection module (315A-315D) is configured to perform one or more method steps according to claims 1 to 10.

14. A computer readable medium having machine-readable instructions stored therein, that when executed by a processor, cause the processor to perform method steps according to any of the claims 1-11.
